# EUROPÄISCHE PATENTANMELDUNG

(11) **EP 3 318 897 A1**
(43) Veröffentlichungstag der Anmeldung: **09.05.2018**
(21) Anmeldenummer: 17001748.7
(22) Anmeldetag: 24.10.2017
(51) Int. Cl.: G01S 19/01

(54) **EINRICHTUNG UND VERFAHREN ZUR ABWEHR EINER DROHNE**

(30) Priorität: 03.11.2016 DE 102016013114
(71) Anmelder: Diehl Defence GmbH & Co. KG, 88662 ÜBERLINGEN (DE)
(72) Erfinder: Koch, Volker, DE - 90607 Rückersdorf (DE); Wachtl, Stefan, DE - 97422 Schweinfurt (DE); Wolfschmitt, Clemens, DE - 91242 Ottensoos (DE)
(74) Vertreter: Diehl Patentabteilung

(57) **Zusammenfassung**

Die Erfindung betrifft eine Einrichtung zur Abwehr einer Drohne, welche mittels eines satellitengestützten Navigationssystems zu einem Ziel gesteuert wird, umfassend:
einen ersten Sendeempfänger (SE1) an einem ersten Ort,
mit einem GNSS-Empfänger (1) zum Empfangen eines primären GNSS-Signals mit einer GNSS-Trägerfrequenz (TF1), wobei das primäre GNSS-Signal zu den Koordinaten des ersten Orts korrespondierende Informationen enthält,
einer ersten Frequenzumsetzereinheit (2) zum Umsetzen des GNSS-Signals auf eine von der GNSS-Trägerfrequenz (TF1) verschiedenen Übertragungsfrequenz (TF2) und einem HF-Sender (3) zum Senden des auf die Übertragungsfrequenz umgesetzten GNSS-Signals, und
einen zweiten Sendeempfänger (SE2) an einem vom ersten Ort verschiedenen zweiten Ort,
mit einem HF-Empfänger (4) zum Empfangen des umgesetzten GNSS-Signals, einer zweiten Frequenzumsetzereinheit (5) zum Zurücksetzen der Übertragungsfrequenz (TF2) des umgesetzten GNSS-Signals auf die GNSS-Trägerfrequenz (TF1), wobei ein zum primären GNSS-Signal korrespondierendes sekundäres GNSS-Signal gebildet wird, und
einem GNSS-Sender (6) zum Senden des sekundären GNSS-Signals als Spoofing-Signal zur Drohne.

## Beschreibung

Die Erfindung betrifft eine Einrichtung und ein Verfahren zur Abwehr einer Drohne, welche mittels eines satellitengestützten Navigationssystems gesteuert wird.

In Zukunft muss damit gerechnet werden, dass Drohnen zum Ausspähen sicherheitsrelevanter Bereiche oder für Angriffe auf zu schützende Personen, Objekte oder Orte eingesetzt werden. Drohnen können mittels eines satellitengestützten Navigationssystems gesteuert werden. Die Steuerung mittels eines satellitengestützten Navigationssystems bzw. die "Waypoint-Navigation" ist z. B. in der
US 2004/0193334 A1 offenbart. Jeder Wegpunkt kann durch ein von den Satelliten des globalen Navigation-Satellitensystems (GNSS) empfangenes Signal bestimmt werden.

Es ist bekannt, dass die satellitengestützte Navigation durch den Einsatz von Störsendern gestört werden kann. Dazu wird ein GNSS-Signal simuliert und mittels eines Störsenders gesendet. Dieses Verfahren ist aufwändig und kostenintensiv.

Aufgabe der Erfindung ist es, die Nachteile nach dem Stand der Technik zu beseitigen. Es sollen insbesondere eine einfache und kostengünstige Einrichtung sowie ein einfaches und kostengünstiges Verfahren zur Abwehr einer Drohne angegeben werden.

Diese Aufgabe wird durch die Merkmale der Patentansprüche 1 und 7 gelöst. Zweckmäßige Ausgestaltungen der Erfindung ergeben sich aus den Merkmalen der Patentansprüche 2 bis 6 und 8 bis 14.

Nach Maßgabe der Erfindung wird eine Einrichtung zur Abwehr einer Drohne, welche mittels eines satellitengestützten Navigationssystems zu einem Ziel gesteuert wird, vorgeschlagen, umfassend:
einen ersten Sendeempfänger an einem ersten Ort,
mit einem GNSS-Empfänger zum Empfangen eines primären GNSS-Signals mit einer GNSS-Trägerfrequenz, wobei das primäre GNSS-Signal zu den Koordinaten des ersten Orts korrespondierende Informationen enthält,
einer ersten Frequenzumsetzereinheit zum Umsetzen des GNSS-Signals auf eine von der GNSS-Trägerfrequenz verschiedenen Übertragungsfrequenz und
einem HF-Sender zum Senden des auf die Übertragungsfrequenz umgesetzten GNSS-Signals, und
einen zweiten Sendeempfänger an einem vom ersten Ort verschiedenen zweiten Ort,
mit einem HF-Empfänger zum Empfangen des umgesetzten GNSS-Signals,
einer zweiten Frequenzumsetzereinheit zum Zurücksetzen der Übertragungsfrequenz des umgesetzten GNSS-Signals auf die GNSS-Trägerfrequenz, wobei ein zum primären GNSS-Signal korrespondierendes sekundäres GNSS-Signal gebildet wird, und
einem GNSS-Sender zum Senden des sekundären GNSS-Signals als Spoofing-Signal zur Drohne.

Unter dem Begriff "Drohne" wird im Sinne der vorliegenden Erfindung ein unbemanntes Luftfahrzeug verstanden, welches eigenständig anhand von gespeicherten Positionsdaten, z. B. GPS-Koordinaten, navigiert. Bei der Drohne kann es sich um ein unbemanntes Flugzeug oder einen unbemannten Helikopter handeln. Insbesondere kann die Drohne ein unbemannter Helikopter mit mehreren Rotoren sein.

Unter dem Begriff "Abwehr" wird verstanden, dass die fliegende Drohne daran gehindert wird, ihr Ziel zu erreichen, insbesondere indem sie von ihrem Ziel abgelenkt wird.

Unter dem Begriff "GNSS-Signal" wird ein Signal verstanden, welches mehrere von GNSS-Satelliten gesendete Positionssignale umfasst. Zurzeit wird als GNSS insbesondere das sogenannte "GPS" (Global Positioning System) genutzt, welches Signale auf einer zivilen Frequenz und einer verschlüsselten militärisch genutzten Frequenz sendet. Über den Empfang von zumindest drei, insbesondere zumindest vier, Signalen der GPS-Satelliten wird die Position des Empfängers bestimmt.

Im Sinne der vorliegenden Erfindung werden unter dem Begriff "primäres GNSS-Signal" die von den GNSS-Satelliten ausgesendeten Signale verstanden.

Unter dem Begriff "sekundäres GNSS-Signal" werden Signale verstanden, welche die Informationen des primären GNSS-Signals eines Orts enthalten, jedoch nicht von einem Satelliten ausgesendet werden.

Nach der vorliegenden Erfindung wird ein erster Sendeempfänger an einem ersten Ort angeordnet, welcher sich in der Nähe eines zu schützenden Orts, Objekts oder einer zu schützenden Person befindet. Der erste Ort liegt am Ziel oder in der Nähe des Ziels der abzuwehrenden Drohne. Das am ersten Ort empfangene GNSS-Signal wird über Funk an einen zweiten Sendeempfänger gesandt, welcher sich an einem vom ersten Ort verschiedenen zweiten Ort befindet. Der zweite Sendeempfänger sendet ein sekundäres GNSS-Signal aus, welches die zum ersten Ort korrespondierenden Informationen enthält. Wenn die Drohne ihre Position auf der Grundlage des sekundären GNSS-Signals berechnet, wird am zweiten Ort der erste Ort vorgetäuscht. Das GNSS-Signal kann ein verschlüsseltes oder ein unverschlüsseltes GNSS-Signal sein. Der Abstand zwischen dem ersten Ort und dem zweiten Ort beträgt vorzugsweise zumindest hundert Meter, insbesondere zumindest einen Kilometer. Als Übertragungsfrequenz bzw. als Übertragungsträgerfrequenz wird zweckmäßigerweise eine HF-Frequenz, insbesondere eine Frequenz im GHz-Bereich, genutzt.

Zweckmäßigerweise umfasst der GNSS-Sender eine Richtantenne. Damit kann das sekundäre GNSS-Signal selektiv zur abzuwehrenden Drohne ausgesandt werden. Eine Beeinflussung anderer GNSS-Empfänger, welche z. B. in zivilen Kraftfahrzeugen und dgl. genutzt werden, wird somit reduziert.

In einer zweckmäßigen Ausgestaltung der Erfindung umfasst die erste und/oder die zweite Frequenzumsetzereinheit zumindest einen Filter zur Rauschunterdrückung.

Insbesondere kann mit dem Filter das GNSS-Signal jeweils nach dem Umsetzen gefiltert werden.

Insbesondere umfasst die erste und/oder die zweite Frequenzumsetzereinheit zumindest einen Verstärker. Mit dem Verstärker kann die Amplitude des GNSS-Signals jeweils vor oder nach dem Umsetzen des GNSS-Signals auf eine andere Frequenz, z. B. die Übertragungsfrequenz, GNSS-Trägerfrequenz oder eine Zwischenfrequenz, verstärkt werden. Insbesondere wird das GNSS-Signal mit der jeweils höheren Frequenz verstärkt.

In einer besonders zweckmäßigen Ausgestaltung enthält die erste und/oder die zweite Frequenzumsetzereinheit zwei oder mehr in Reihe geschaltete Frequenzumsetzer. Zwischen zwei Frequenzumsetzern können ein Filter und/oder ein Verstärker geschaltet sein. Mit einer solchen z. B. zweistufigen Frequenzumsetzereinheit kann das Signal-zu-Rausch-Verhältnis verbessert werden.

Eine zweite Amplitude des sekundären GNSS-Signals ist zweckmäßigerweise größer als eine erste Amplitude des primären GNSS-Signals. Damit kann sichergestellt werden, dass das sekundäre GNSS-Signal, welches als Spoofing-Signal ausgesendet wird, eine größere Intensität als das primäre GNSS-Signal aufweist. Infolgedessen wird von der Drohne das sekundäre GNSS-Signal zur Berechnung der Position verwendet.

Nach Maßgabe der Erfindung wird weiterhin ein Verfahren zur Abwehr einer Drohne, welche mittels eines satellitengestützten Navigationssystems zu einem Ziel gesteuert wird, vorgeschlagen, welches die folgenden Schritte umfasst:
a) Bereitstellen eines ersten Sendeempfängers an einem ersten Ort, umfassend einen GNSS-Empfänger, eine erste Frequenzumsetzereinheit und einen HF-Sender, und
b) Bereitstellen eines zweiten Sendeempfängers an einem vom ersten Ort verschiedenen zweiten Ort, umfassend einen HF-Empfänger, eine zweite Frequenzumsetzereinheit und einen GNSS-Sender,
c) Empfangen eines primären GNSS-Signals mit einer GNSS-Trägerfrequenz mittels des GNSS-Empfängers, wobei das primäre GNSS-Signal zu den Koordinaten des ersten Orts korrespondierende Informationen enthält,
d) Umsetzen des GNSS-Signals auf eine von der GNSS-Trägerfrequenz verschiedene Übertragungsfrequenz,
e) Senden des umgesetzten GNSS-Signals mittels des HF-Senders,
f) Empfangen des umgesetzten GNSS-Signals mittels des HF-Empfängers,
g) Zurücksetzen des umgesetzten GNSS-Signals auf die GNSS-Trägerfrequenz zu einem sekundären GNSS-Signal mittels der zweiten Frequenzumsetzereinheit, und
h) Senden des sekundären GNSS-Signals mittels des GNSS-Senders als GNSS-Spoofing-Signal zur Drohne.

Durch die Übertragung des GNSS-Signals mittels Funk können der erste Ort und der zweite Ort relativ weit voneinander entfernt liegen, z. B. zumindest einen Kilometer, so dass ein erster Ort wirksam vor dem Angriff einer Drohne geschützt werden kann. Wegen der Übertragung per Funk kann ein Verlegen eines Kabels mit den damit verbundenen Nachteilen, z. B. hoher Signalintensitätsverlust, sichtbare Verlegung eines Kabels usw., vermieden werden. Das vorgeschlagene Verfahren ist flexibel und einfach durchführbar.

Bevorzugt wird das sekundäre GNSS-Signal gerichtet gesendet. Durch ein gerichtetes Senden kann ein Abstand zwischen erstem und zweitem Ort erhöht werden.

Zweckmäßigerweise wird das GNSS-Signal beim Umsetzen oder Zurücksetzen gefiltert. Dadurch wird ein Signal-zu-Rausch-Verhältnis des sekundären GNSS-Signals verbessert.

Zweckmäßigerweise wird das GNSS-Signal mittels der ersten Frequenzumsetzereinheit zunächst auf eine erste Zwischenfrequenz bzw. Zwischenträgerfrequenz und nachfolgend auf die Übertragungsfrequenz umgesetzt. Vorteilhafterweise wird auch mittels der zweiten Frequenzumsetzereinheit das GNSS-Signal zunächst auf eine zweite Zwischenfrequenz bzw. Zwischenträgerfrequenz und nachfolgend auf die GNSS-Trägerfrequenz umgesetzt. Mit der jeweils zweistufigen Umsetzung ist es möglich, auch das auf die Zwischenfrequenz umgesetzte GNSS-Signal zu filtern und zu verstärken und so die Signalqualität, insbesondere das Signal-zu-Rausch-Verhältnis, zu verbessern. Zweckmäßigerweise wird bei jedem Umsetzen auf eine andere Frequenz das GNSS-Signal gefiltert und verstärkt. Insbesondere ist es vorteilhaft, das GNSS-Signal mittels der ersten und/oder zweiten Frequenzumsetzereinheit in der Weise zu verstärken, dass eine zweite Amplitude des sekundären GNSS-Signals größer als eine erste Amplitude des primären GNSS-Signals ist. Die größere Amplitude des sekundären GNSS-Signals ermöglicht in besonderer Weise den Einsatz als Spoofing-Signal.

In einer vorteilhaften Ausgestaltung ist die Übertragungsfrequenz höher als die GNSS-Trägerfrequenz.

Zweckmäßigerweise wird der abzuwehrenden Drohne am zweiten Ort das Erreichen des ersten Orts vorgetäuscht. Sie kann in der Nähe des zweiten Orts unschädlich gemacht werden.

Nachfolgend werden Ausführungsbeispiele der Erfindung anhand von Zeichnungen näher erläutert. Es zeigen:
- Fig. 1: eine schematische Darstellung des ersten Sendeempfängers und des zweiten Sendeempfängers,
- Fig. 2: eine schematische Darstellung einer Ausgestaltung der ersten Frequenzumsetzereinheit,
- Fig. 3: eine schematische Darstellung einer Ausgestaltung der zweiten Frequenzumsetzereinheit und
- Fig. 4: ein Ablaufdiagramm des Verfahrens.

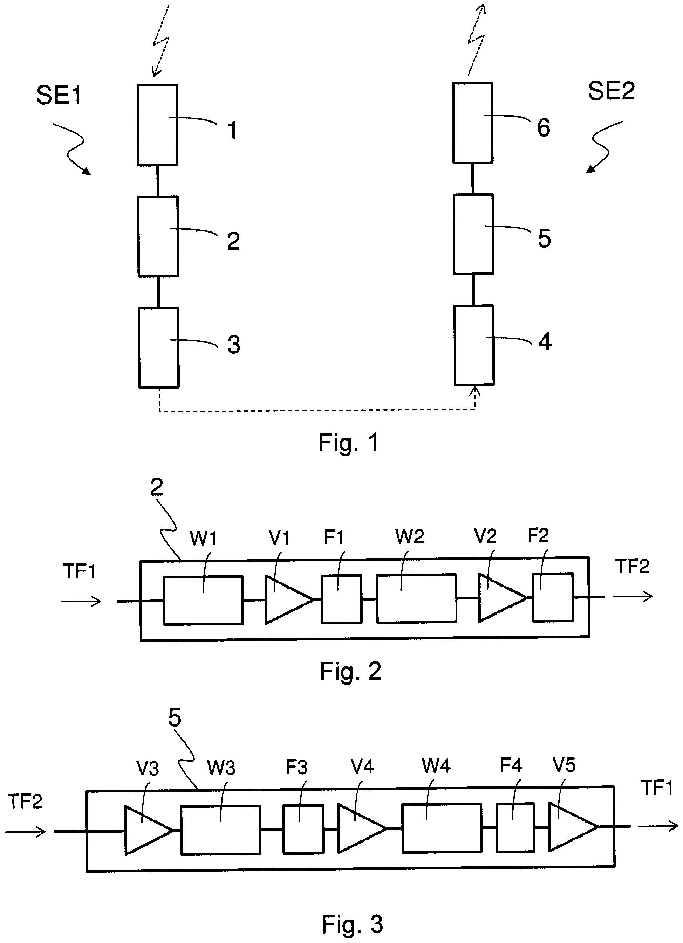

Fig. 1 zeigt einen ersten Sendeempfänger SE1. Der erste Sendeempfänger SE1 umfasst einen GNSS-Empfänger 1, eine erste Frequenzumsetzereinheit 2 und einen HF-Sender 3. Mit dem GNSS-Empfänger 1 kann ein primäres GNSS-Signal mit einer GNSS-Trägerfrequenz TF1 empfangen werden. Das empfangene GNSS-Signal wird in der ersten Frequenzumsetzereinheit 2 auf eine Übertragungsfrequenz TF2 umgesetzt. Mit dem HF-Sender 3 kann das umgesetzte GNSS-Signal mit einer Übertragungsfrequenz TF2 gesendet werden. Zweckmäßigerweise ist die Übertragungsfrequenz TF2 eine Frequenz im Hochfrequenzbereich oberhalb der GNSS-Trägerfrequenz TF1, z. B. oberhalb der GPS-Trägerfrequenzen von 1,22 bzw. 1,57 GHz.

Die Fig. 1 zeigt weiterhin einen zweiten Sendeempfänger SE2, welcher einen HF-Empfänger 4, eine zweite Frequenzumsetzereinheit 5 und einen GNSS-Sender 6 umfasst. Mit dem HF-Empfänger 4 wird das auf die Übertragungsfrequenz TF2 umgesetzte GNSS-Signal empfangen. Das umgesetzte GNSS-Signal wird in der zweiten Frequenzumsetzereinheit 5 auf die GNSS-Trägerfrequenz TF1 zurückgesetzt und kann dann mit dem GNSS-Sender 6 gesendet werden.

Die Informationen des GNSS-Signals, aus welchen die Koordinaten des ersten Orts berechnet werden können, bleiben bei den Frequenzumsetzungen erhalten.

Fig. 2 zeigt eine Ausführungsform der ersten Frequenzumsetzereinheit 2. Die erste Frequenzumsetzereinheit 2 umfasst eine Reihenschaltung aus einem ersten W1 und einem zweiten Frequenzumsetzer W2, jeweils verbunden mit einem ersten V1 und zweiten Verstärker V2 und einem ersten F1 und zweiten Filter F2. Mit dem ersten Frequenzumsetzer W1 wird das GNSS-Signal zunächst auf eine erste Zwischenfrequenz umgesetzt, welche höher als die GNSS-Trägerfrequenz ist. Nachfolgend wird das GNSS-Signal mittels des ersten Verstärkers V1 verstärkt und mit dem ersten Filter F1 gefiltert. Das auf die erste Zwischenfrequenz umgesetzte GNSS-Signal wird nun mittels des zweiten Frequenzumsetzers W2, eines zweiten Verstärkers V2 und eines zweiten Filters F2 auf die Übertragungsfrequenz TF2 umgesetzt, verstärkt und gefiltert. Die Übertragungsfrequenz TF2 ist höher als die erste Zwischenfrequenz. Dadurch wird ein rauscharmes umgesetztes GNSS-Signal mit ausreichender Signalintensität zur Übertragung auf den zweiten Sendeempfänger SE2 erhalten.

Fig. 3 zeigt eine Ausführungsform der zweiten Frequenzumsetzereinheit 5. Auf der in der Fig. 3 gezeigten linken Seite wird ein GNSS-Signal mit der Übertragungsfrequenz TF2 eingespeist. Die Frequenzumsetzereinheit 5 umfasst als erste Umsetzerstufe zum Zurücksetzen auf eine zweite Zwischenfrequenz eine Reihenschaltung aus einem dritten Verstärker V3, einem dritten Frequenzumsetzer W3 und einem dritten Filter F3 und eine zweite Umsetzerstufe aus einem vierten Verstärker V4, einem vierten Frequenzumsetzer W4 und einem vierten Filter F4 sowie einem nachfolgenden fünften Verstärker V5.

Mit der zweiten Frequenzumsetzereinheit 5 wird das GNSS-Signal mit der Übertragungsfrequenz TF2 zunächst verstärkt und nachfolgend auf die Zwischenfrequenz zurückgesetzt und zur Rauschunterdrückung gefiltert. In der zweiten Umsetzerstufe wird das GNSS-Signal zunächst wieder mittels des vierten Verstärkers V4 verstärkt, mit dem vierten Frequenzumsetzer W4 auf die GNSS-Trägerfrequenz TF1 zurückgesetzt und schließlich im vierten Filter F4 gefiltert, so dass das sekundäre GNSS-Signal erzeugt wird. Der fünfte Verstärker V5 dient der Endverstärkung des sekundären GNSS-Signals, so dass das sekundäre GNSS-Signal mit einer zweiten Amplitude ausgesendet werden kann. Die zweite Amplitude ist so bemessen, dass das sekundäre GNSS-Signal eine deutlich höhere Intensität als ein vom Satelliten empfangenes GNSS-Signal aufweist.

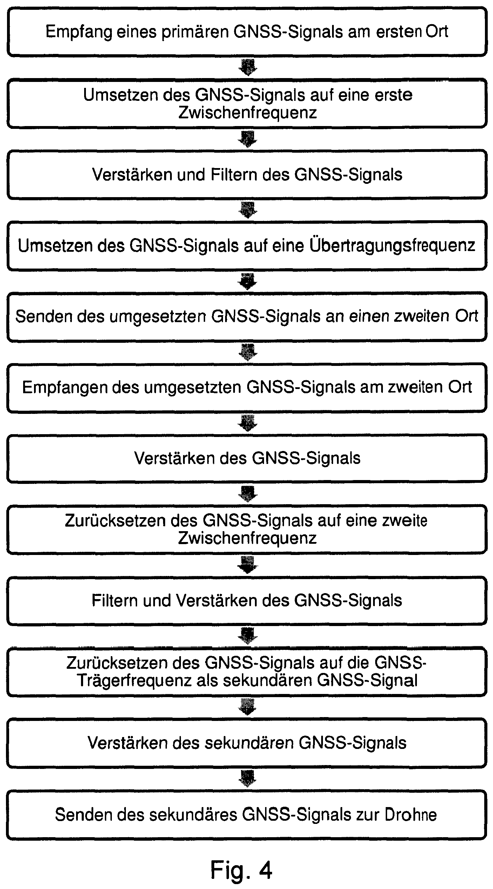

Fig. 4 stellt den oben beschriebenen Ablauf des Verfahrens zur Abwehr einer Drohne schematisch dar.

### Bezuaszeichenliste

- 1: GNSS-Empfänger
- 2: erste Frequenzumsetzereinheit
- 3: HF-Sender
- 4: HF-Empfänger
- 5: zweite Frequenzumsetzereinheit
- 6: GNSS-Sender

- F1: erster Filter
- F2: zweiter Filter
- F3: dritter Filter
- F4: vierter Filter
- SE1: erster Sendeempfänger
- SE2: zweiter Sendeempfänger
- TF1: GNSS-Trägerfrequenz
- TF2: Übertragungsfrequenz
- V1: erster Verstärker
- V2: zweiter Verstärker
- V3: dritter Verstärker
- V4: vierter Verstärker
- V5: fünfter Verstärker
- W1: erster Frequenzumsetzer
- W2: zweiter Frequenzumsetzer
- W3: dritter Frequenzumsetzer
- W4: vierter Frequenzumsetzer

## Patentansprüche

1. Einrichtung zur Abwehr einer Drohne, welche mittels eines satellitengestützten Navigationssystems zu einem Ziel gesteuert wird, umfassend:
einen ersten Sendeempfänger (SE1) an einem ersten Ort,
mit einem GNSS-Empfänger (1) zum Empfangen eines primären GNSS-Signals mit einer GNSS-Trägerfrequenz (TF1), wobei das primäre GNSS-Signal zu den Koordinaten des ersten Orts korrespondierende Informationen enthält,
einer ersten Frequenzumsetzereinheit (2) zum Umsetzen des GNSS-Signals auf eine von der GNSS-Trägerfrequenz (TF1) verschiedenen Übertragungsfrequenz (TF2) und
einem HF-Sender (3) zum Senden des auf die Übertragungsfrequenz umgesetzten GNSS-Signals, und
einen zweiten Sendeempfänger (SE2) an einem vom ersten Ort verschiedenen zweiten Ort,
mit einem HF-Empfänger (4) zum Empfangen des umgesetzten GNSS-Signals,
einer zweiten Frequenzumsetzereinheit (5) zum Zurücksetzen der Übertragungsfrequenz (TF2) des umgesetzten GNSS-Signals auf die GNSS-Trägerfrequenz (TF1), wobei ein zum primären GNSS-Signal korrespondierendes sekundäres GNSS-Signal gebildet wird, und
einem GNSS-Sender (6) zum Senden des sekundären GNSS-Signals als Spoofing-Signal zur Drohne.

2. Einrichtung nach Anspruch 1,
wobei der GNSS-Sender (6) eine Richtantenne umfasst.

3. Einrichtung nach einem der vorhergehenden Ansprüche,
wobei die erste (2) und/oder die zweite Frequenzumsetzereinheit (5) zumindest einen Filter zur Rauschunterdrückung umfasst.

4. Einrichtung nach einem der vorhergehenden Ansprüche,
wobei die erste (2) und/oder die zweite Frequenzumsetzereinheit (5) zumindest einen Verstärker umfasst.

5. Einrichtung nach einem der vorhergehenden Ansprüche,
wobei die erste (2) und/oder die zweite Frequenzumsetzereinheit (5) zwei oder mehr in Reihe geschaltete Frequenzumsetzer enthält, und
wobei zwischen zwei Frequenzumsetzern ein Filter und/oder ein Verstärker geschaltet sind.

6. Einrichtung nach einem der vorhergehenden Ansprüche,
wobei das primäre GNSS-Signal eine erste Amplitude und das sekundäre GNSS-Signal eine zweite Amplitude aufweist,
wobei die zweite Amplitude größer als die erste Amplitude ist.

7. Einrichtung nach einem der vorhergehenden Ansprüche,
wobei die Übertragungsfrequenz (TF2) höher als die GNSS-Trägerfrequenz (TF1) ist.

8. Verfahren zur Abwehr einer Drohne,
welche mittels eines satellitengestützten Navigationssystems zu einem Ziel gesteuert wird, mit den folgenden Schritten:
a) Bereitstellen eines ersten Sendeempfängers (SE1) an einem ersten Ort, umfassend einen GNSS-Empfänger (1), eine erste Frequenzumsetzereinheit (2) und einen HF-Sender (3), und
b) Bereitstellen eines zweiten Sendeempfängers (SE2) an einem vom ersten Ort verschiedenen zweiten Ort, umfassend einen HF-Empfänger (4), eine zweite Frequenzumsetzereinheit (5) und einen GNSS-Sender (6),
c) Empfangen eines primären GNSS-Signals mit einer GNSS-Trägerfrequenz (TF1) mittels des GNSS-Empfängers (1), wobei das primäre GNSS-Signal zu den Koordinaten des ersten Orts korrespondierende Informationen enthält,
d) Umsetzen des GNSS-Signals auf eine von der GNSS-Trägerfrequenz (TF1) verschiedene Übertragungsfrequenz (TF2),
e) Senden des umgesetzten GNSS-Signals mittels des HF-Senders (3),
f) Empfangen des umgesetzten GNSS-Signals mittels des HF-Empfängers (4),
g) Zurücksetzen des umgesetzten GNSS-Signals auf die GNSS-Trägerfrequenz (TF1) zu einem sekundären GNSS-Signal mittels der zweiten Frequenzumsetzereinheit (5), und
h) Senden des sekundären GNSS-Signals mittels des GNSS-Senders (6) als GNSS-Spoofing-Signal zur Drohne.

9. Verfahren nach Anspruch 8,
wobei das sekundäre GNSS-Signal gerichtet gesendet wird.

10. Verfahren nach einem der Ansprüche 8 oder 9,
wobei beim Umsetzen und/oder Zurücksetzen das GNSS-Signal mittels eines Filters gefiltert wird.

11. Verfahren nach einem der Ansprüche 8 bis 10,
wobei das GNSS-Signal mittels der ersten Frequenzumsetzereinheit (2) zunächst auf eine erste Zwischenfrequenz und nachfolgend auf die Übertragungsfrequenz (TF2) umgesetzt wird.

12. Verfahren nach einem der Ansprüche 8 bis 11,
wobei das GNSS-Signal mittels der zweiten Frequenzumsetzereinheit (5) zunächst auf eine zweite Zwischenfrequenz und nachfolgend auf die GNSS-Trägerfrequenz (TF1) umgesetzt wird.

13. Verfahren nach einem der Ansprüche 8 bis 12,
wobei das GNSS-Signal mittels der ersten (2) und/oder zweiten Frequenzumsetzereinheit (5) verstärkt wird, dass eine zweite Amplitude des sekundären GNSS-Signals größer als eine erste Amplitude des primären GNSS-Signals ist.

14. Verfahren nach einem der Ansprüche 8 bis 13,
wobei die Übertragungsfrequenz (TF2) höher als die GNSS-Trägerfrequenz (TF1) ist.

15. Verfahren nach einem der Ansprüche 8 bis 14,
wobei der Drohne am zweiten Ort das Erreichen des ersten Orts vorgetäuscht wird.
